# EUROPÄISCHE PATENTSCHRIFT

(11) **EP 0 473 830 B1**
(45) Veröffentlichungstag und Bekanntmachung des Hinweises auf die Patenterteilung: **23.11.1994**
(21) Anmeldenummer: 90117228.8
(22) Anmeldetag: 06.09.1990
(51) Int. Cl.: H01R 23/68

(54) **Anordnung von Einheiten einer wahlfrei batteriepufferbaren Stromversorgungseinrichtung**
Disposition of unities of an uninterrupted power supply with buffer battery
Disposition d'unités d'une installation d'alimentation secourue par batterie

(43) Veröffentlichungstag der Anmeldung: 11.03.1992
(73) Patentinhaber: Siemens Nixdorf Informationssysteme Aktiengesellschaft, 33102 Paderborn (DE)
(72) Erfinder: Adam, Jürgen, Dipl.-Ing., D-8872 Burgau (DE); Schwarz, Karl, Dipl.-Ing., D-8908 Krumbach (DE)
(74) Vertreter: Fuchs, Franz-Josef, Dr.-Ing.

(56) Entgegenhaltungen:
- EP-A- 0 220 677
- GB-A- 2 210 214
- US-A- 4 084 869
- US-A- 4 514 784

## Beschreibung

Die Erfindung betrifft eine batteriegepufferte Stromversorgungseinrichtung gemäß dem Oberbegriff des Anspruchs 1.

Es sind Stromversorgungseinrichtungen bekannt, die zur Absicherung gegen einen Netzausfall neben einem Stromversorgungsschaltungsteil einen Batteriepufferungsschaltungsteil aufweisen (z.B. PCIM EUROPE, Nov. 1989, Seiten 252 bis 254, "Battery Backed Switcher Provides UPS Capability"), der im Bedarfsfall eine Gleichspannung an den Stromversorgungsschaltungsteil liefert, so daß die Stromversorgungseinrichtung weiterarbeiten kann.

Für Anwendungsfälle der Stromversorgungseinrichtung, bei denen eine Batteriepufferung nicht notwendig ist, sind solche Stromversorgungseinrichtungen zu teuer. Andererseits sind nicht batteriegepufferte Stromversorgungseinrichtungen nicht verwendbar, wenn eine batteriegepufferte Stromversorgungseinrichtung benötigt wird.

Dem Bestreben des Anwenders, stets eine richtige Stromversorgungseinrichtung zur Verfügung zu haben, ohne sich von Anfang an festlegen zu müssen, welcher Typ von Stromversorgungseinrichtung letztlich zur Anwendung kommt, kann dadurch Rechnung getragen werden, daß die Stromversorgungseinrichtung umrüstbar ausgebildet wird. Im einfachsten Fall kann das dadurch geschehen, daß der Batteriesatz einer batteriegepufferten Stromversorgungseinrichtung als Umrüstsatz angeboten wird, wodurch die verbleibende Resteinheit, die dann die nicht batteriegepufferte Stromversorgungseinrichtung darstellt, billiger wird. Eine derartige Stromversorgungseinrichtung ist in der Praxis bekannt. Die verbleibende Resteinheit ist aber immer noch relativ teuer, weil nämlich der technische Aufwand für die an sich mögliche Batteriepufferung in der verbleibenden Resteinheit ungenützt noch vorhanden ist und mitgezahlt werden muß.

Um eine möglichst preisgünstige, umrüstbare nicht batteriegepufferte Stromversorgungseinrichtung zu erhalten, können möglichst viele Teile des Batteriepufferungsschaltungsteils gesondert ausgeführt und neben dem Stromversorgungsschaltungsteil eigenständig angeordnet werden. Die elektrische Verbindung kann mittels an- und abklemmbarer Kabel hergestellt werden. Die gesondert ausgeführten und eigenständig angeordneten Teile des Batterieschaltungsteils gehören dann zum Umrüstsatz. Ein Nachteil dabei ist jedoch, daß die Anzahl der Tätigkeiten, bis die nicht batteriegepufferte Stromversorgungseinrichtung zu einer batteriegepufferten Stromversorgungseinrichtung umgerüstet ist, groß ist. sind. Die dabei verwendeten Kabel sind außerdem teuer, anfällig gegen Bruch und weisen wegen der Kabellänge hohe Spannungsverluste auf.

Aufgabe der Erfindung ist es deshalb, eine batteriegepufferte Stromversorgungseinrichtung anzugeben, so daß einerseits der nicht genützte technische Aufwand in der nicht batteriegepufferten Stromversorgungseinrichtung und andererseits die Anzahl der für die Umrüstung notwendigen Tätigkeiten mininmal sind.

Diese Aufgabe wird bei einer Stromversorgungseinrichtung der eingangs genannten Art durch die Merkmale im Kennzeichen des Anspruchs 1 gelöst. Die dort angegebenen Maßnahmen bewirken, daß der technische Aufwand, der in der nicht batteriegepufferten Stromversorgungseinrichtung ungenutzt vorhanden ist, der aber notwendig ist, um eine nicht batteriegepufferte Stromversorgungseinrichtung in eine batteriegepufferte Stromversorgungseinrichtung umrüsten zu können, minimal sind. Der in der nicht batteriegepufferten Stromversorgungseinrichtung ungenützte technische Aufwand besteht aus dem Vorsehen einer einzigen zusätzlichen Steckerbuchse, die auf der, den Stromversorgungsschaltungsteil tragenden Flachbaugruppe angeordnet ist. Diese Steckerbuchse verursacht kaum Mehrkosten. Das verwendete starre Steckverbindersystem hat den Vorteil, daß es ein Verbindungskabel ersetzt, das bruchanfällig ist und wegen der Leitungslänge hohe Spannungsverluste verursacht.

Vorteilhafte Ausgestaltungen der Erfindung sind Gegenstand von Unteransprüchen. Danach wird eine Stiftleiste mit Mittelsockel verwendet, wobei der Mittelsockel vorteilhafterweise so ausgebildet ist, daß er in dem, der Stiftleiste in der Trägerplatte zugeordneten Durchbruch feststellbar ist. Dadurch ist die Stiftleiste schnell montiert und gleich fixiert. Durch die Feststellung der Stiftleiste in der Trägerplatte ist das Aufstecken und Abziehen der Flachbaugruppen leicht möglich. Die Verwendung von angebundenen Stiftleisten hat den Vorteil, daß auf den verwendeten Flachbaugruppen nur eine Sorte von Steckerbuchsen verwendet werden müssen. Stiftleisten, die bereits mit den Steckerbuchsen auf der, den Batteriepufferungsschaltungsteil tragenden Flachbaugruppe fest verbunden sind, haben dagegen den Vorteil, daß der Arbeitsgang für die Montage der Stiftleisten auf die Trägerplatte entfällt.

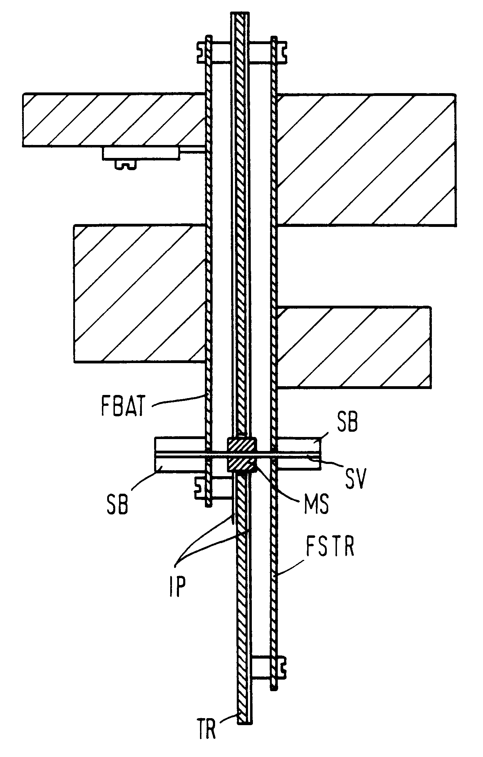

Nachfolgend wird ein Ausführungsbeispiel der Erfindung anhand der Zeichnung näher erläutert.

Die Figur zeigt eine erfindungsgemäße batteriegepufferte Stromversorgungseinrichtung. Die Stromversorgungseinrichtung setzt sich aus einem Batteriepufferungsschaltungsteil und einem Stromversorgungsschaltungsteil zusammen. In der Figur sind eine Flachbaugruppe FBAT, auf der der Batteriepufferungsschaltungsteil der Stromversorgungseinrichtung angeordnet ist und eine Ladeschaltung umfaßt, eine Trägerplatte TR und eine Flachbaugruppe FSTR, auf der der Stromversorgungsschaltungsteil der Stromversorgungseinrichtung angeordnet ist, dargestellt. Die Trägerplatte TR wird durch ein Teil des Gesamtgehäuses der Stromversorgungseinrichtung gebildet. Als Trägerplatte TR dient ein solches Teil des Gesamtgehäuses der Stromversorgungseinrichtung, das auf der einen Flachseite Platz für die eine, den Stromversorgungsschaltungsteil tragende Flachbaugruppe FSTR und auf der anderen Flachseite Platz für die andere, den Batterieschaltungsteil tragende Flachbaugruppe FBAT bietet.

Die nicht batteriegepufferte Stromversorgungseinrichtung, die sozusagen die Grundeinheit der erfindungsgemäßen Stromversorgungseinrichtung darstellt, weist nur die, den Stromversorgungsschaltungsteil tragende Flachbaugruppe FSTR auf, die werkseitig an die betreffende Stelle der Trägerplatte TR montiert ist. Sie ist so an die Trägerplatte TR montiert, daß die Unterseite der Flachbaugruppe gegen die Trägerplatte TR gerichtet ist. Die, den Stromversorgungsschaltungsteil tragende Flachbaugruppe FSTR weist eine zusätzliche Steckerbuchse SB auf, die im Zusammenwirken mit der, den Batteriepufferungsschaltungsteil tragenden Flachbaugruppe FBAT ein Teil eines Steckverbindersystems ist. Zum Funktionieren der nicht batteriegepufferten Stromversorgungseinrichtung ist die Steckerbuchse SB an sich nicht notwendig.

Nach der Umrüstung der nicht batteriegepufferten Stromversorgungseinrichtung zu einer batteriegepufferten Stromversorgungseinrichtung ist auf der dafür vorgesehenen Flachseite der Trägerplatte TR die, den Batterieschaltungsteil tragende Flachbaugruppe FBAT montiert. Die Unterseite der, den Batterieschaltungsteil tragenden Flachbaugruppe FBAT ist wie die Unterseite der, den Stromversorgungsschaltungsteil tragenden Flachbaugruppe FSTR gegen die Trägerplatte TR gerichtet. Der Verbindungsabstand zwischen den beiden Flachbaugruppen FBAT und FSTR ist auf diese Weise am geringsten. Die Montage der, den Batteriepufferungsschaltungsteil tragenden Flachbaugruppe FBAT erfolgt zweckmäßigerweise lösbar. Die Stromversorgungseinrichtung kann dann leicht wieder als nicht batteriegepufferte Stromversorgungseinrichtung eingesetzt werden. Auf der, den Batterieschaltungsteil tragenden Flachbaugruppe FBAT ist eine weitere Steckerbuchse SB angeordnet, die ebenfalls ein Teil des bereits angesprochenen Steckverbindersystems ist. Die beiden Flachbaugruppen FBAT und FSTR sind wenigstens teilweise, im Ausführungsbeispiel ganz, überlappend auf der einen bzw. anderen Flachseite der Trägerplatte TR angeordnet. Die jeweiligen Steckerbuchsen SB auf der einen bzw. anderen Flachbaugruppe FBAT bzw. FSTR sind innerhalb des überlappenden Bereichs der Flachbaugruppen zueinander gegenüberliegend angeordnet. In die Steckerbuchsen SB der jeweiligen Flachbaugruppe FBAT bzw. FSTR greift ein Steckerverbinder SV ein und stellt die elektrische Verbindung zwischen den Flachbaugruppen her. Um die Flachbaugruppen FBAT und FSTR in der angegebenen Anordnung verbinden zu können, weisen sowohl die Flachbaugruppen FBAT und FSTR als auch die Tragerplatte TR an entsprechender Stelle Durchbrüche auf, durch die der Steckerverbinder SV hindurchgreifen und die Steckerbuchsen kontaktieren kann. Die beiden Steckerbuchsen SB der Flachbaugruppen FBAT und FSTR und der Steckerverbinder SV bilden zusammen das erwähnte starre Steckerverbindersystem, über das die für den Batteriepufferungsschaltungsteil und den Stromversorgungsschaltungsteil notwendigen Signale sowie die Versorgung für die Ladeschaltung und die zu puffernde Spannung geführt werden.

Bei dem Steckverbinder SV handelt es sich um eine Stiftleiste, deren Einzelstifte jeweils nach zwei Seiten hin freie Stiftenden aufweisen. Ferner weist die Stiftleiste im Mittelbereich zwischen den freien Stiftenden der Einzelstifte einen Mittelsockel MS auf, der so ausgebildet ist, daß er in einen zugehörigen Durchbruch in der Trägerplatte TR feststellbar ist. Die Feststellung kann beispielsweise dadurch erfolgen, daß der Mittelsockel MS in den Durchbruch in der Trägerplatte TR eingeklemmt wird. Die freien Stiftenden der Stiftleiste tauchen bei der Montage in die Steckerbuchse SB der jeweiligen Flachbaugruppe FBAT bzw. FSTR ein.

Im Ausführungsbeispiel sind Isolierplatten IP verwendet, die die Flachbaugruppen FBAT und FSTR gegenüber der Trägerplatte TR isolieren.

Zum Umrüsten der nicht batteriegepufferten Stromversorgungseinrichtung zu einer batteriegepufferten Stromversorgungseinrichtung müssen insgesamt folgende Tätigkeiten ausgeführt werden: Einstecken des Steckverbinders SV in die Trägerplatte TR, eventuell Einlegen von Isolierplatten IP und Aufstecken sowie Befestigen der, den Batterieschaltungsteil tragenden Flachbaugruppe FBAT.

Gemäß dieser Tätigkeiten gehört zu einem Umrüstsatz zum Umrüsten der nicht batteriegepufferten Stromversorgungseinrichtung zu einer batteriegepufferten Stromversorgungseinrichtung lediglich ein Steckverbinder SV, eventuell Isolierplatten IP und die, den Batterieschaltungsteil traggende Flachbaugruppe FBAT. Sind die Stiftleisten bereits mit den Steckerbuchsen SB der, den Batterieschaltungsteil tragenden Flachbaugruppe FBAT fest verbunden, umfaßt der Umrüstsatz nur mehr die Flachbaugruppe FBAT.

## Patentansprüche

1. Batteriegepufferte Stromversorgungseinrichtung mit einem Stromversorgungsschaltungsteil und einem Batteriepufferungsschaltungsteil, **dadurch gekennzeichnet**, daß der Stromversorgungsschaltungsteil und der Batteriepufferungsschaltungsteil jeweils auf einer Flachbaugruppe (FBAT bzw. FSTR) angeordnet sind, die wenigstens teilweise überlappend einander gegenüberliegend auf der einen bzw. anderen Seite einer Trägerplatte (TR) bezüglich wenigstens der, den Batteriepufferungsschaltungsteil tragenden Flachbaugruppe (FBAT) lösbar befestigt und im Überlappungsbereich mittels eines starren Steckverbindersystems (SB, SV) miteinander elektrisch verbunden sind.

2. Einrichtung nach Anspruch 1,
**dadurch gekennzeichnet**, daß das starre Steckverbindersystem (SB, SV) wenigstens zwei Steckerbuchsen (SB) umfaßt, von denen die eine auf der einen und die andere auf der anderen Flachbaugruppe (FBAT bzw. FSTR) jeweils der anderen gegenüberliegend angeordnet sind und daß wenigstens ein starrer Steckverbinder (SV) vorgesehen ist, der flachbaugruppenübergreifend in die eine bzw. andere Steckerbuchse (SB) der auf den Flachbaugruppen (FBAT und FSTR) einander gegenüberliegenden Steckerbuchsen (SB) eingreift.

3. Einrichtung nach Anspruch 2,
**dadurch gekennzeichnet**, daß die Unterseiten der Flachbaugruppen (FBAT, FSTR) jeweils zur Trägerplatte (TR) hin angeordnet sind und daß sowohl die Flachbaugruppen (FBAT, FSTR) als auch die Trägerplatte (TR) Durchbrüche aufweist, durch die der Steckverbinder (SV) in die jeweiligen Steckerbuchsen (SB) der beiden Flachbaugruppen (FBAT, FSTR) eingreift.

4. Einrichtung nach Anspruch 3,
**dadurch gekennzeichnet**, daß der Steckverbinder (SV) als Stiftleiste ausgebildet ist, deren Einzelstifte jeweils nach zwei Seiten hin freie Stiftenden aufweisen.

5. Einrichtung nach Anspruch 4,
**dadurch gekennzeichnet**, daß die Stiftleiste in einem Mittelbereich zwischen den freien Stiftenden der Einzelstifte einen Mittelsockel (MS) aufweist, der in dem Durchbruch für den Steckverbinder (SV) in der Trägerplatte (TR) feststellbar ist.

6. Einrichtung nach Anspruch 3,
**dadurch gekennzeichnet**, daß der Steckverbinder SV) als Stiftleiste ausgebildet ist, die mit der Steckerbuchse (SV) der, den Batteriepufferungsschaltungsteil tragenden Flachbaugruppe (FBAT) fest verbunden ist.

## Claims

1. Battery-buffered electrical power supply device having an electrical power supply circuit section and a buffer-battery circuit section, characterized in that the electrical power supply circuit section and the buffer-battery circuit section are in each case arranged on a printed circuit board assembly (FBAT or FSTR) which assemblies are fixed in an at least partially overlapping manner and opposite another on one side or the other of a carrier board (TR), releasably at least with respect to the printed circuit board assembly (FBAT) carrying the buffer-battery circuit section, and are electrically interconnected in the overlapping region by means of a rigid plug connector system (SB, SV).

2. Device according to Claim 1, characterized in that the rigid plug connector system (SB, SV) comprises at least two plug sockets (SB), one of which is arranged on the one printed circuit board assembly (FBAT) and the other of which is arranged on the other printed circuit board assembly (FSTR), in each case opposite one another, and in that at least one rigid plug connector (SV) is provided which engages in a manner extending beyond the printed circuit board assemblies into one plug socket (SB) or the other of the plug sockets (SB) which are opposite one another on printed circuit board assemblies (FBAT and FSTR).

3. Device according to Claim 2, characterized in that the undersides of the printed circuit board assemblies (FBAT, FSTR) are in each case arranged facing the carrier board (TR) and in that both the printed circuit board assemblies (FBAT, FSTR) and the carrier boom (TR) have perforations through which the plug connector (SV) engages into the respective plug sockets (SB) of the two printed circuit board assemblies (FBAT, FSTR).

4. Device according to Claim 3, characterized in that the plug connector (SV) is constructed as a pin strip whose individual pins each have free pin ends on two sides.

5. Device according to Claim 4, characterized in that the pin strip has in a central region between the free pin ends of the individual pins a central support (MS) which can be locked in the perforation for the plug connector (SV) in the carrier board (TR).

6. Device according to Claim 3, characterized in that the plug connector (SV) is constructed as a pin strip which is firmly connected to the plug socket (SB) of the printed circuit board assembly (FBAT) carrying the buffer-battery circuit section.

## Revendications

1. Dispositif d'alimentation en courant assisté par batterie, comportant une partie formant circuit d'alimentation en courant et une partie formant circuit d'assistance par batterie, caractérisé par le fait que la partie formant circuit d'alimentation en courant et la partie formant circuit d'assistance par batterie sont disposées sur des modules plats respectifs (FBAT ou FSTR), qui sont fixés au moins partiellement en chevauchement, en vis-à-vis sur l'une et l'autre des faces d'une plaque de support (TR) de façon amovible par rapport au moins au module plat (FBAT) portant la partie formant circuit d'assistance par batterie, et sont reliés électriquement entre eux dans la zone de chevauchement, au moyen d'un système rigide à connecteur (SB,SV).

2. Dispositif suivant la revendication 1, caractérisé par le fait que le système de connecteur rigide (SB,SV) comporte au moins deux douilles d'enfichage (SB), dont l'une est disposée sur l'un des modules plats (FBAT ou FSTR) et dont l'autre est disposé sur l'autre module chacune en vis-à-vis de l'autre douille, et qu'il est prévu au moins un connecteur rigide (SB), qui pénètre, en faisant saillie par rapport au module plat, dans l'une ou l'autre des douilles d'enfichage (SB) disposées en vis-à-vis sur les modules plats (FBAT et FSTR).

3. Dispositif suivant la revendication 2, caractérisé par le fait que les faces inférieures des modules plats (FBAT, FSTR) sont disposées en étant tournées respectivement vers la plaque de support (TR), et qu'aussi bien les modules plats (FBAT, FSTR) que la plaque de support (TR) comportent des passages, par lesquels le connecteur (SV) pénètre dans les douilles d'enfichage respectives (SB) des deux modules plats (FBAT, FSTR).

4. Dispositif suivant la revendication 3, caractérisé par le fait que le connecteur (SV) est réalisé sous la forme d'une barrette à broches, dont les broches individuelles ont chacune des extrémités libres en direction des deux côtés.

5. Dispositif suivant la revendication 4, caractérisé par le fait que la barrette à broches comporte, dans une partie médiane, entre les extrémités libres des broches individuelles, un socle médian (MS), qui peut être fixé dans le passage prévu pour le connecteur (SV) et ménagé dans la plaque de support (TE).

6. Dispositif suivant la revendication 3, caractérisé par le fait que le connecteur (SV) est réalisé sous la forme d'une barrette à broches, qui est reliée rigidement à la douille d'enfichage (SV) du module plat (FBAD) portant la partie formant circuit d'assistance par batterie.
